# EUROPÄISCHE PATENTSCHRIFT

(11) **EP 3 830 540 B1**
(45) Veröffentlichungstag und Bekanntmachung des Hinweises auf die Patenterteilung: **11.09.2024**
(21) Anmeldenummer: 19749632.6
(22) Anmeldetag: 25.07.2019
(51) Int. Cl.: G01M 13/021, G01M 13/028, G01M 15/04, F02D 41/00, F02D 41/22, G01M 15/12, G01P 3/00, F02D 41/14, F02D 41/28

(54) **VERFAHREN ZUM ERKENNEN EINER VERÄNDERUNG AM BETRIEBSVERHALTEN EINES KURBELTRIEBS EINES KRAFTFAHRZEUGS**
METHOD FOR RECOGNIZING A CHANGE IN THE OPERATING BEHAVIOR OF A CRANKSHAFT DRIVE OF A MOTOR VEHICLE
PROCÉDÉ DE RECONNAISSANCE D'UN CHANGEMENT DE COMPORTEMENT DE COMMANDE D'UN ENTRAÎNEMENT DE VILEBREQUIN D'UN VÉHICULE AUTOMOBILE

(30) Priorität: 30.07.2018 DE 102018118320
(43) Veröffentlichungstag der Anmeldung: 09.06.2021
(73) Patentinhaber: MAN Truck & Bus SE, 80995 München (DE)
(72) Erfinder: SCHMIDT, Christopher, 90768 Fürth (DE); SUCHANEK, Roman, 91126 Schwabach (DE)
(74) Vertreter: v. Bezold & Partner Patentanwälte - PartG mbB
(86) Internationale Anmeldenummer: PCT/EP2019/070087
(87) Internationale Veröffentlichungsnummer: WO 2020/025452

(56) Entgegenhaltungen:
- WO-A1-2016/000733
- DE-A1- 102008 032 708
- DE-A1- 102010 041 889

## Beschreibung

Die Erfindung betrifft ein Verfahren zum Erkennen einer Veränderung am Betriebsverhalten eines Kurbeltriebs eines Kraftfahrzeugs, vorzugsweise Nutzfahrzeugs. Insbesondere betrifft die Erfindung ein Verfahren zum Erkennen von Fehlzuständen eines im Kurbeltrieb vorhandenen Torsionsschwingungsdämpfers, vorzugsweise ein Klemmen oder Slippen einer Sekundärmasse des Torsionsschwingungsdämpfers. Ferner betrifft die Erfindung ein Fahrzeug, vorzugsweise Nutzfahrzeug, aufweisend eine Steuereinrichtung, die eingerichtet ist, ein derartiges Verfahren auszuführen.

Während des Betriebs des Verbrennungsmotors im Kraftfahrzeug ist der Kurbeltrieb, insbesondere die Kurbelwelle sowie der oftmals vorhandene Torsionsschwingungsdämpfer, hohen Biege- und Torsionsbelastungen ausgesetzt. Darüber hinaus werden die Bauteile und Lager durch Drehschwingungen beansprucht, die aus dem ständigen stoßweisen Beschleunigen und Abbremsen der Drehbewegung des Kurbeltriebs resultieren. Um einen Ausfall des Fahrzeugs durch einen Motorschaden zu verhindern, ist es wünschenswert einen Verschleiß des Kurbeltriebs, insbesondere einen Verschleiß des Torsionsschwingungsdämpfers, möglichst frühzeitig zu erkennen.

Im Stand der Technik ist bekannt den Kurbeltrieb und insbesondere den Torsionsschwingungsdämpfer im Antriebsstrang mittels einer Ordnungsanalyse des Drehzahlsignals zu überwachen. Beispielsweise offenbart die Offenlegungsschrift DE 10 2010 041 889 A1 hierfür ein Verfahren, bei dem das Drehzahlsignal zunächst in den Frequenzraum transformiert und anschließend die resultierenden Signalamplituden verschiedener Motorenordnungen mit Referenz-Amplitudenwerten verglichen werden. Aus der Amplitudendifferenz der beiden Signale wird dann auf mögliche Fehlzustände des Torsionsschwingungsdämpfers geschlossen. Nachteilig an diesem Verfahren ist allerdings, dass die erfassten Messsignale im Zuge der Fourier-Analyse aufwendig nachbearbeitet werden müssen. Dies bedingt eine Sensorhardware mit ausreichend Rechenleistung, was entsprechend deren Kosten erhöht.

Ein ähnliches Vorgehen ist auch aus der DE 10 2008 032 708 A1 bekannt. Diese offenbart ein Verfahren zur Überwachung eines Drehschwingungsdämpfers, wobei zunächst die Drehzahl eines rotierenden Bauteiles durch einen Sensor, der ein Drehzahlsignal erzeugt, erfasst wird. Dieses Drehzahlsignal wird durch eine Fourier-Analyse und insbesondere eine schnelle Fourier-Analyse in seine Frequenzanteile zerlegt, welche anschließend ausgewertet werden.

Weiterhin offenbart die WO 2016/000733 A1 in diesem Zusammenhang ein Verfahren zur Erfassung des Dämpfungsverhaltens eines Torsionsdämpfers in einer Kupplungsscheibe. Das Verfahren umfasst die Schritte des Erfassens eines aktuellen Wertes einer Drehbewegungscharakteristik einer Getriebewelle und des Erkennens des Dämpfungsverhaltens des Torsionsdämpfers durch Vergleichen des aktuellen Wertes der Drehbewegungscharakteristik mit mindestens einem vorbestimmten Wert, einem gespeicherten Wert der Drehbewegungscharakteristik der Getriebewelle, der registriert wurde, als der Torsionsdämpfer neu war, oder einem registrierten aktuellen Wert einer entsprechenden Drehbewegungscharakteristik einer Abtriebswelle einer Antriebseinheit.

Die Aufgabe der Erfindung ist deshalb, ein im Vergleich zum Stand der Technik verbessertes Verfahren bereitzustellen, um Veränderung am Betriebsverhalten eines Kurbeltriebs eines Kraftfahrzeugs zu erkennen. Insbesondere liegt der Erfindung die Aufgabe zugrunde, ein einfacher zu realisierendes und kostengünstigeres Verfahren zur Kurbeltriebüberwachung bereitzustellen, das weniger Rechenoperationen benötigt und zudem auch in der Lage ist, die exakte Art eines Fehlzustands zu identifizieren.

Diese Aufgaben werden durch ein Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die Erfindung basiert dabei auf den an sich bekannten Gedanken, den Zustand des Kurbeltriebs anhand dessen von der aktuellen Geometrie und Materialzusammensetzung abhängigen Schwingungsverhaltens zu überwachen. Hierzu wird das Drehzahlsignal auf das Vorhandensein dem eigentlichen Signal überlagerter Schwingungsanteile mit höherer Frequenz untersucht. Im Gegensatz zu den bisherigen Verfahren, die meist auf einer aufwändigen Fourier-Analyse des Drehzahlsignals beruhen, ist der Grundgedanke der Erfindung aus dem Drehzahlsignal mittels eines Bandpassfilters nur die Frequenzbereiche herauszufiltern, in welchen Veränderungen im Resonanzverhalten auftreten, falls ein Fehlzustand des Kurbeltriebs vorliegt. Dadurch wird einerseits die zu verarbeitende Datenmenge reduziert, andererseits ist die Bandpassfilterung technisch deutlich einfacher zu realisieren als eine komplette Fourier-Analyse des Signals. Da ferner das Resonanzverhalten des Kurbeltriebs für jeden möglichen Fehlzustand charakteristisch ist, lässt sich durch eine Überwachung mehrerer Frequenzbereiche darüber hinaus auch die genaue Art des Fehlzustands aus dem sich dabei ergebenden Signalmuster feststellen.

Gemäß eines allgemeinen Aspekts des Erfindung wird ein Verfahren zum Erkennen einer Veränderung am Betriebsverhalten eines Kurbeltriebs eines Kraftfahrzeugs, vorzugsweise eines Nutzfahrzeugs, bereitgestellt. Insbesondere kann der Kurbeltrieb dabei auch einen Torsionsschwingungsdämpfer umfassen. Als Betriebsverhalten, welches insbesondere das drehzahlabhängige Schwingungs-, Lage- und Resonanzverhalten eines Kurbeltriebs mit z. B. Kurbelwelle, Lager, Pleuel, Kolben, Ringen, Bolzen, Schwingungsdämpfer und Schwungräder, umfasst, kann dabei die Art und Weise verstanden werden, wie ein Kurbeltrieb unter vorgegebenen Bedingungen (z. B. Drehzahl) arbeitet. Ferner umfasst der Kurbeltrieb eine Kurbelwelle, einen im Betrieb der Kurbelwelle rotierenden Impulsgeber und eine ortsfeste Sensoreinrichtung, welche ein von der Drehzahl des Impulsgebers abhängiges Drehzahlsignal N erzeugt. Zudem oder alternativ kann die ortsfeste Sensoreinrichtung auch ein von der Winkelgeschwindigkeit des Impulsgebers abhängiges Winkelgeschwindigkeitssignal ω erzeugen. Drehzahlsignal und Winkelgeschwindigkeitssignal unterscheiden sich lediglich um den Faktor 2π und stehen über die Beziehung ω = 2πN in Zusammenhang.

Impulsgeber sowie entsprechende Sensoreinrichtungen zur Erfassung der Rotationsbewegung des Impulsgebers sind an sich im Stand der Technik bekannt. So können beispielsweise magnetische Sensoren, darunter induktive, oszillatorisch-induktive, magneto-resistive, Wirbelstromsensoren und/oder Hall-Effekt-Sensoren für das anspruchsgemäße Verfahren verwendet werden. Allesamt beruhen auf einer berührungslosen Detektion einer Veränderung des magnetischen Flusses am Ort der Sensoreinrichtung durch die Bewegung des Impulsgebers. Ferner können auch optische Sensoren verwendet werden, die die Intensität, Phase und/oder Polarisation des auf die Sensoreinrichtung einfallenden und durch die Rotation des Impulsgebers modulierten Lichts messen. Der Ausdruck Licht soll dabei für jede Art elektromagnetischer Strahlung verstanden werden.

Der Impulsgeber hat die Aufgabe die Sensoreinrichtung im Betrieb des Kurbeltriebs zu beeinflussen, und kann beispielsweise als Zahnrad, Geberrad, Code- oder Lochscheibe ausgebildet sein. Allerdings können auch beliebig weitere Strukturen, welche in einem festen Verhältnis zur Kurbelwelle rotieren und zumindest abschnittsweise über einen, insbesondere umfangseitigen, Bereich in Form eines Loches, eines Vorsprungs, einer Nut oder einen sonstigen Bereich unterschiedlicher Magnetisierung, Reflektivität und/oder Transmissivität verfügen. Werden diese Strukturen an der Sensoreinrichtung vorbeigeführt, so kann aus der Veränderung des magnetischen Flusses und/oder der räumlichen Lichtverteilung am Ort der Sensoreinrichtung pro Zeiteinheit die Geschwindigkeit, mit der der Impulsgeber rotiert, ermittelt werden. Dieses von der Sensoreinrichtungen erzeugte Drehzahl- und/oder Winkelgeschwindigkeitssignal bildet die Grundlage für das beanspruchte Verfahren, wobei im Folgenden zur besseren Übersicht nur die Verfahrensschritte für das Drehzahlsignal N beschrieben werden. Die offenbarte Lehre lässt sich allerdings entsprechend auch auf das Winkelgeschwindigkeitssignal ω übertragen.

Erfindungsgemäß umfasst das Verfahren folgende Schritte:
Während des Betriebs des Kurbeltriebs wird ein aktuelles Drehzahlsignal Nₐₖₜ der Sensoreinrichtung, vorzugsweise mit einer hohen Abtastrate, erfasst. Dieses aktuelle Drehzahlsignal Nₐₖₜ wird mittels eines Bandpassfilters gefiltert, das dabei mindestens einen, eine erste Mittenfrequenz f₁ umfassenden, ersten Durchlassbereich D₁ aufweist. Mit anderen Worten lässt das Bandpassfilter nur den Signalanteil des aktuellen Drehzahlsignal Nₐₖₜ passieren, der im Frequenzband des durch zwei Grenzfrequenzen charakterisierten Durchlassbereiches D₁ liegt, z. B. D₁ = 120-130 Hz. Die Frequenzbereiche unterhalb und oberhalb des Durchlassbereiches, d. h. im vorherigen Beispiel unterhalb von 120 Hz und oberhalb von 130 Hz, werden dabei gesperrt oder deutlich abgeschwächt. Unter dem Ausdruck "Mittenfrequenz" kann wie üblich das geometrische Mittel der unteren und oberen Grenzfrequenz des Durchlassbereiches verstanden werden (d. h. im vorherigen Beispiel ist f₁ =125 Hz). Das gefilterte aktuelle Drehzahlsignal Nₐₖₜ wird dann mit einem in einem Speicher hinterlegten Referenzsignal N_{ref} verglichen. Basierend auf dem Vergleich des gefilterten aktuellen Drehzahlsignals Nₐₖₜ mit dem Referenzsignal N_{ref} werden so Veränderung am Betriebsverhalten des Kurbeltriebs erkannt. Bei dem Referenzsignal N_{ref} kann es sich um ein fahrzeugspezifisches oder um ein fahrzeugunspezifisches Referenzsignals handeln. D. h. das Referenzsignal kann genau für das Fahrzeug, in dem der Kurbeltrieb verbaut wurde, oder für ein anderes Referenzfahrzeug, aber mit im Wesentlichen baugleichen Kurbeltrieb, bestimmt worden sein. Zudem können sowohl Nₐₖₜ als auch N_{ref} mehrere Signalwerte einer informationstragenden Größe umfassen. Der Vorteil der Erfindung im Vergleich zu den Fourier-basierten Verfahren im Stand der Technik ist, dass anstelle des kompletten Frequenzbereichs, der auch eine Reihe nicht relevanter Informationen enthält, gezielt nur der Frequenzbereich überwacht wird, in dem im Fall eines Fehlzustand Veränderungen am Drehzahlsignal auftreten. Damit entfällt eine aufwändige Fourier-Analyse des Drehzahlsignals und zudem wird die zu verarbeitende Datenmenge reduziert.

Zwar wird das Verfahren gezielt zum Erkennen von Veränderungen am Betriebsverhalten eines Kurbeltriebs beschrieben, jedoch kann das Prinzip auch zum Erkennen von Veränderungen am Betriebsverhalten der Nocken-, Antriebs- oder beliebiger anderen Welle verwendet werden, wenn der Impulsgeber entsprechend an die Nocken-, Antriebs- oder sonstige Welle gekoppelt ist. Der besondere Vorteil beim Überwachen des Kurbeltriebs liegt darin, dass für die meisten Kraftfahrzeuge eine derartige Anordnung der einzelnen Komponenten, d. h. Impulsgeber und Sensoreinrichtung, zur Drehzahlmessung bereits am Kurbeltrieb vorhanden ist.

Nach einer Ausführungsform der Erfindung wird beim Schritt des Erkennens einer Veränderung am Betriebsverhalten des Kurbeltriebs gezielt ein Fehlzustand eines im Kurbeltrieb vorhandenen Torsionsschwingungsdämpfers erkannt. Falls der Kurbeltrieb ein derartiges Bauteil zur Reduzierung unerwünschter Torsionsschwingungen der Kurbelwelle umfasst, so lassen sich mit dem beanspruchten Verfahren fehlerhafte Betriebszustände dieses Bauteils, beispielsweise ein Klemmen oder Slippen einer Sekundärmasse des Torsionsschwingungsdämpfers erkennen. Derartige Fehlzustände treten vor allem bei Torsionsschwingungsdämpfern auf, die zwei gegeneinander drehbeweglich gelagerte Massen (Primär- und Sekundärmasse) umfassen, die durch mindestens eine Feder-Dämpfereinheit miteinander wirkverbunden sind. Ein Klemmen der Sekundärmasse kann dabei dann vorliegen, falls die Sekundärmasse nicht mehr gegenüber der Primärmasse verdreht werden kann. Ein Slippen der sekundären Schwungmassen kann hingegen dann vorliegen, falls die Reibung zwischen Primär- und Sekundärmasse z. B. infolge eines Luftpolsters aufgehoben wird und sich die Massen frei zueinander bewegen können.

Um derartige oder weitere Fehlzustände des Kurbeltriebs zuverlässig zu detektieren, sieht eine weitere Ausführungsform der Erfindung vor, dass es sich bei der ersten Mittenfrequenz f₁ um eine Frequenz handelt, bei der Resonanzeffekte im Kurbeltrieb auftreten, falls ein Fehlzustand des Kurbeltriebs vorliegt. Hintergrund ist, dass sich mit dem Vorliegen eines Fehlzustand des Kurbeltriebs, z. B. ein Klemmen einer Sekundärmasse eines im Kurbeltrieb vorhandenen Torsionsschwingungsdämpfers, meist das Schwingungsverhalten des gesamten Kurbeltriebs ändert und infolgedessen Resonanzeffekte bei unterschiedlichen und/oder zusätzlichen Frequenzen im Vergleich zum intakten Kurbeltrieb auftreten. Als Resonanzeffekt soll dabei das Auftreten einer Schwingung mit großer Amplitude bei einer bestimmten Frequenz verstanden werden. Durch das gezielte Überwachen der Signalamplitude bei einer ersten Mittenfrequenz f₁, die gerade einer Resonanzfrequenz eines Fehlzustands entspricht, kann somit das Auftreten dieses Fehlzustands sehr sensitiv überwacht werden. Da folglich nur der für das Vorliegen des Fehlzustand relevante Frequenzbereich berücksichtigt wird, wird auf vorteilhafte Weise die zu verarbeitende Datenmenge reduziert.

Zur Festzulegung der ersten Mittenfrequenz f₁ des Bandpassfilters, bei der es sich vorzugsweise um eine Frequenz handelt, bei der Resonanzeffekte im Kurbeltrieb auftreten, falls ein Fehlzustand des Kurbeltriebs vorliegt, kann das Verfahren ferner folgende Schritte umfassen:
Simulieren oder Messen des Resonanzverhaltens eines intakten Kurbeltriebs für mehrere Anregungsfrequenzen. Als Anregung kann dabei eine extern auf das Bauteil beaufschlagte Schwingung bestimmter Frequenz verstanden werden. Zum Messen des Resonanzverhaltens kann der intakte, insbesondere im Fahrzeug montierte, Kurbeltrieb mittels eines Stoß- oder Schwinganregers oder einem sonstigem weißen Rauschen zum Schwingen angeregt werden und die von Geometrie und Material der Bauteile abhängige Systemantwort, d.h. das Resonanzverhalten in Form ein oder mehrerer charakteristischer Schwingungsmoden, detektiert werden. Alternativ kann das Resonanzverhalten auch mittels finiter Elemente Verfahren bestimmt werden. Vorzugsweise wird das Resonanzverhalten für mehrere Frequenzen bestimmt, die auch beim Betrieb des Kurbeltriebs auftreten und/oder erfasst werden können. Ferner erfolgt auch für mindestens einen Fehlzustand des Kurbeltriebs ein Simulieren oder Messen des Resonanzverhaltens des Kurbeltriebs mit dem entsprechenden Fehlzustand für mehrere Anregungsfrequenzen. Auch in diesem Fall wird das Resonanzverhalten vorzugsweise für mehrere Frequenzen bestimmt, die auch beim Betrieb des Kurbeltriebs auftreten und/oder erfasst werden können. Anschließend wird eine Anregungsfrequenz ermittelt, bei der sich das Resonanzverhalten des intakten Kurbeltriebs und des Kurbeltriebs mit Fehlzustand unterscheiden, was beispielsweise durch einen Vergleich der entsprechenden Schwingungsamplituden erfolgen kann. Basierend auf der ermittelten Anregungsfrequenz wird dann der, die erste Mittenfrequenz f₁ umfassenden, ersten Durchlassbereichs D₁ des Bandpassfilters festgelegt. Der Vorteil liegt darin, dass so die konkrete Geometrie und Materialzusammensatzung des Kurbeltriebs bei der Festlegung der ersten Mittenfrequenz f₁ berücksichtigt wird, was insgesamt die Genauigkeit und Zuverlässigkeit des Verfahrens erhöht.

Gemäß einer weiteren Ausführungsform wird das aktuelle Drehzahlsignal Nₐₖₜ als Funktion des Drehmoments und/oder der Drehzahl der Kurbelwelle erfasst. Dies kann beispielsweise für bestimmte diskrete Drehmomentwerte und/oder Drehzahlwerte erfolgen. Die Erfassung des aktuellen Drehzahlsignal Nₐₖₜ der Sensoreinrichtung kann jedoch auch für einen bestimmten Drehmomentbereich oder mehrere Drehmomentbereiche und/oder einen bestimmten Drehzahlbereich oder mehrere Drehzahlbereiche erfolgen. Insbesondere in einem Drehzahlbereich von 0 bis höchstens 10000 U/min. Ferner ist auch das im Speicher hinterlegte Referenzsignal der Sensoreinrichtung entsprechend als Funktion des Drehmoments und/oder der Drehzahl der Kurbelwelle hinterlegt. Das Vergleichen erfolgt nun dadurch, dass ein bei einem bestimmten Drehmoment und/oder einer bestimmten Drehzahl der Kurbelwelle erfasster Drehzahlsignalwert des gefilterten aktuellen Drehzahlsignals Nₐₖₜ mit einem Referenzsignalwert der entsprechenden Drehzahl verglichen wird. Der Vorteil dieses drehmoment- und/oder drehzahlabhängigen Auswertens des Drehzahlsignals ist, dass sich die Zuverlässigkeit und Genauigkeit des Verfahrens erhöht, da sich durch mögliche Fehlzustände induzierte Veränderungen am Resonanzverhalten bei verschiedenen Drehzahlen und/oder Drehmomenten unterschiedlich stark bemerkbar machen.

In einer bevorzugten Ausführungsform wird das gefilterte aktuelle Drehzahlsignal Nₐₖₜ vor dem Schritt des Vergleichens differenziert oder integriert, wobei das Differenzieren und Integrieren numerisch oder analog erfolgen kann. Das Vergleichen und Erkennen erfolgt anschließend basierend auf dem differenzierten oder integrierten gefilterten aktuellen Drehzahlsignal Nₐₖₜ. Mit anderen Worten umfasst das Verfahren damit unter anderem die Schritte: Differenzieren oder Integrieren des gefilterten aktuellen Drehzahlsignals Nₐₖₜ, Vergleichen des differenzierten oder integrierten gefilterten aktuellen Drehzahlsignals Nₐₖₜ mit einem in einem Speicher hinterlegten Referenzsignal N_{ref} und Erkennen einer Veränderung am Betriebsverhalten des Kurbeltriebs basierend auf dem Vergleich des differenzierten oder integrierten gefilterten aktuellen Drehzahlsignals Nₐₖₜ mit dem Referenzsignal N_{ref}. Anstelle des Drehzahlsignals N kann entsprechend wiederum auch das Winkelgeschwindigkeitssignal ω verwendet werden. Das differenzierte Drehzahlsignal N oder differenzierte Winkelgeschwindigkeitssignal ω wird im Folgenden auch als Drehzahlbeschleunigungssignal a oder Winkelbeschleunigungssignal α bezeichnet. Das integrierte Drehzahlsignal N oder integrierte Winkelgeschwindigkeitssignal ω wird im Folgenden auch als Drehzahlwinkelsignal f oder Winkelsignal ϕ bezeichnet. Der Vorteil des Differenzierens des gefilterten erfassten Signals ist dabei, dass so nicht der stationäre, sondern der dynamische Signalanteil berücksichtigt wird, der genauere Informationen über mögliche Auslenkungen oder Lastverteilungen im Kurbeltrieb enthält. Durch Integrieren des gefilterten erfassten Signals lässt sich hingegen das Signal verstärken und glätten, was wiederum die Zuverlässigkeit des Verfahrens erhöht. Mit dem Differenzieren oder Integrieren des gefilterten aktuellen Drehzahlsignals Nₐₖₜ, soll ferner auch ein entsprechendes Adaptieren des Referenzsignal N_{ref} einhergehen. Mit anderen Worten, die Signalwerte des Referenzsignals N_{ref} können variieren, je nachdem, ob für den Vergleich ein gefilterten aktuellen Drehzahlsignals Nₐₖₜ oder ein zusätzlich differenziertes bzw. integriertes gefiltertes aktuelles Drehzahlsignals Nₐₖₜ verwendet wird.

Erfindungsgemäß ist ferner vorgesehen, dass das Bandpassfilter mindestens einen ersten und einen zweiten, vom ersten disjunkten Durchlassbereich D₁ und D₂ aufweist, die jeweils verschiedene Mittenfrequenzen f₁ und f₂ umfassen. Beispielsweise kann das Bandpassfilter einen ersten Durchlassbereich D₁ = 140-155 Hz mit einer Mittenfrequenz von 147 Hz und einen zweiten Durchlassbereich D₂ = 160-185 Hz mit einer Mittenfrequenz von 172 Hz umfassen. Disjunkt soll in diesem Zusammenhang bedeuten, dass die beiden Durchlassbereiche keine gemeinsame Frequenz besitzen. Vorzugsweise handelt es sich bei dem ersten und zweiten Durchlassbereich um schmalbandige Durchlassbereiche, insbesondere mit einer Bandbreite von 15 Hz. Alternativ kann es sich jedoch auch um breitbandige Durchlassbereiche handeln. Darüber hinaus ist die Ausführungsform nicht auf die Verwendung von nur zwei Durchlassbereichen beschränkt, es können beliebig viele weitere Durchlassbereiche Dₙ mit Mittenfrequenzen fₙ verwendet werden. Der Vorteil mehrerer, vorzugsweise disjunkter, Durchlassbereiche ist, dass damit - wie im Folgenden noch genauer erläutert - nicht nur das prinzipielle Erkennen eines Fehlzustands, sondern auch die exakte Identifikation der Art des Fehlzustands ermöglicht wird, insbesondere die Unterscheidung zweier unterschiedlicher möglicher Fehlzustände.

Gemäß einer weiteren Weiterbildung umfasst das Verfahren dazu zusätzlich den Schritt des Identifizierens eines Fehlzustands des Kurbeltriebs, vorzugsweise ein Klemmen und/oder ein Slippen einer Sekundärmasse eines im Kurbeltrieb vorhandenen Torsionsschwingungsdämpfers, basierend auf dem Vergleich des gefilterten aktuellen Drehzahlsignals Nₐₖₜ mit dem Referenzsignal N_{ref} anhand von Signalwerten bei den verschiedenen Mittenfrequenzen f₁ und f₂. Wiederum ist dabei das Verfahren nicht nur auf zwei Mittenfrequenzen und/oder Durchlassbereiche beschränkt, vielmehr können beliebig viele weite Mittenfrequenzen und/oder Durchlassbereiche berücksichtigt werden. Zudem kann auch anstelle des gefilterten aktuellen Drehzahlsignals Nₐₖₜ wiederum das differenzierte oder integrierte gefilterte aktuelle Drehzahlsignal Nₐₖₜ verwendet werden. Der Ausdruck "Identifizieren eines Fehlzustands" kann in diesem Zusammenhang als Bestimmen der genauen Art des Fehlzustandes verstanden werden, beispielsweise, ob es sich um einen Riss im Kurbeltrieb, einen Lagerschaden, einen Verschleiß des Schwingungsdämpfers etc. handelt. Da jeder Fehlzustand die Geometrie bzw. die Kopplung der einzelnen Kurbeltriebkomponenten zueinander modifiziert, ändert sich damit auch das Resonanzverhalten des Gesamtsystems auf für den jeweiligen Fehlzustand charakteristische Weise. Anhand der Signalwerte bei den verschiedenen Mittenfrequenzen f₁ und f₂, d. h. mit anderen Worten mit dem sich ergebenden Signalmuster, kann somit aus der Kenntnis der charakteristischen Signalwerte bzw. des charakteristischen Signalmusters der einzelnen Fehlzustände bei den verschiedenen Mittenfrequenzen die genaue Art des Fehlzustandes identifiziert werden.

Eine Weiterentwicklung dieser Ausführungsform sieht vor, dass die zweite Mittenfrequenz f₂ größer als die erste Mittenfrequenz f₁ ist und dass ein Klemmen einer Sekundärmasse eines im Kurbeltrieb vorhandenen Torsionsschwingungsdämpfers basierend auf einem erhöhten Signalwert bei der ersten Mittenfrequenz f₁ und/oder ein Slippen einer Sekundärmasse eines im Kurbeltrieb vorhandenen Torsionsschwingungsdämpfers basierend auf einem erhöhten Signalwert bei der zweiten Mittenfrequenz f₂ identifiziert werden kann. Beispielsweise kann hierfür eine erste Mittenfrequenz von f₁ = 147 Hz und eine zweite Mittenfrequenz von f₂ = 175 Hz gewählt werden. Neben dem prinzipiellen Erkennen eines Fehlzustands kann somit anhand des charakteristischen Signalmusters der beiden Fehlzustände auch bestimmt werden, ob ein Slippen und/oder Klemmen einer Sekundärmasse eines im Kurbeltrieb vorhandenen Torsionsschwingungsdämpfers vorliegt.

Gemäß einer weiteren Ausgestaltungsform liegt die erste Mittenfrequenz f₁ des Bandpassfilters im Bereich zwischen 0-400 Hz und/oder das Bandpassfilter besitzt eine Bandbreite zwischen 1-20 Hz. Die Wahl der erste Mittenfrequenz f₁ in diesem Frequenzbereich ist deshalb vorteilhaft, da dort unter üblichen Betriebsbedingungen des Kurbeltrieb meist Resonanzeffekte auftreten.

Nach einer Ausgestaltungsform der Erfindung handelt es sich bei dem Referenzsignal N_{ref} um ein Signal, das in einem Referenzzustand des Kurbeltriebs bestimmt wurde. Der Referenzzustand kann dabei ein durch einen bestimmten Betriebszustand des Kurbeltriebs charakterisierter Zustand sein, der durch das von der Einbaulage und der Drehzahl abhängige Schwingungs- und/oder Lage- und/oder Resonanzverhalten des Kurbeltriebs gekennzeichnet wird. Bei dem Referenzzustand kann es sich um einen Neuzustand des Kurbeltriebs kurz nach der Montage des Kurbeltriebs handeln, vorzugsweise nach der Montage der Sensoreinrichtung und des Impulsgebers, im Kraftfahrzeug. Dies hat den Vorteil, dass der Kurbeltrieb in diesem Zustand keine Verschleißerscheinungen aufweist und somit verschleißbedingte Veränderungen während des Betriebs gut erkannt werden können. Die Angabe "kurz nach der Montage des Kurbeltriebs" ist dabei so zu verstehen, dass keine weiteren fertigungsbedingten Veränderungen an der Einbaulage des Kurbeltriebs, insbesondere an der Position der Sensoreinrichtung und Impulsgeber, vorgenommen werden, allerdings eine Inbetriebnahme des Fahrzeugs noch nicht erfolgt ist. "Kurz nach der Montage des Kurbeltriebs" kann einen Zeitraum bis zu einer Laufleistung des Fahrzeugs von 50 km umfassen.

Alternativ handelt es sich bei dem Referenzzustand um einen Zustand des Kurbeltriebs kurz nach einer Wartung oder Reparatur des Kurbeltriebs. Da die bei der Wartung oder Reparatur möglicherweise vorgenommenen Modifikationen am Kurbeltrieb zu Veränderungen an der Sensoreinrichtung und/oder des Impulsgebers führen können, ist es vorteilhaft, eine Neukalibration des Referenzzustands durchzuführen, um so Fehldiagnosen oder Fehlmeldungen zu vermeiden. Beispielsweise kann hierzu nach der Wartung oder Reparatur des Kurbeltriebs das aktuelle Drehzahl-, Winkelgeschwindigkeits-, Drehzahlbeschleunigungs-, Winkelbeschleunigungs-, Drehzahlwinkel- und/oder Winkelsignal der Sensoreinrichtung drehzahlabhängig erfasst und als neues Referenzsignal im Speicher abgelegt werden. Auch in diesem Fall ist die Angabe "kurz nach einer Wartung oder Reparatur des Kurbeltriebs" so zu verstehen, dass keine weiteren wartungs- oder reparaturbedingten Veränderungen an der Einbaulage des Kurbeltriebs, insbesondere an der Position der Sensoreinrichtung und Impulsgeber, vorgenommen werden, allerdings eine erneute Inbetriebnahme des Fahrzeugs noch nicht erfolgt ist. Alternativ kann es sich bei dem Referenzzustand auch um einen Fehlzustand des Kurbeltriebs handeln, vorzugsweise ein Klemmen und/oder ein Slippen einer Sekundärmasse in einem Torsionsschwingungsdämpfer im Kurbeltrieb. Dies hat den Vorteil, dass, falls verschiedene Fehlzustände - auch als Verschleißzustände bezeichnet - zu einem für den jeweiligen Fehl- oder Verschleißzustand charakteristischen drehzahlabhängigen Schwingungs-, Lage- und Resonanzverhalten des Kurbeltriebs führen, diese Fehlzustände auch als Referenzzustände verwendet werden können, um so eine gezielte Fehlerdiagnose durchzuführen. Zudem können auch mehrere Referenzzustände des Kurbeltriebs im Speicher hinterlegt sein und der Vergleich entsprechend für die mehreren hinterlegten Referenzzustände durchgeführt werden.

Nach einer weiteren Ausgestaltungsform der Erfindung erfolgt der Vergleich des gefilterten aktuellen Drehzahlsignals Nₐₖₜ der Sensoreinrichtung mit dem im Speicher hinterlegten Referenzsignal N_{ref} durch Bilden einer betragsmäßigen Differenz der beiden Signale ΔN=|Nₐₖₜ - N_{ref}|. Falls das gefilterten aktuellen Drehzahlsignals Nₐₖₜ zusätzlich differenziert oder integriert wird, gilt entsprechendes auch für das differenzierte oder integrierte gefilterte aktuelle Drehzahlsignal Nₐₖₜ. Ferner kann beim Schritt des Bildens der betragsmäßigen Differenz zur Verbesserung der Signalqualität Nₐₖₜ zeitlich gemittelt werden, ein Effektivwert und/oder eine positive maximale Signalamplitude von Nₐₖₜ bestimmt werden. Falls die betragsmäßige Differenz der beiden Signale ΔN einen Schwellenwert SW übersteigt und/oder unterschreitet, wird dann eine Meldung ausgegeben. Der Schwellenwert kann dabei fest vorgegeben oder veränderlich sein. Beispielsweise kann der erste Schwellenwert vom Hersteller für eine bestimmte Kombination aus Sensoreinrichtung und Impulsgeber und/oder für einen bestimmten Kurbelwellentyp vorgegeben werden. Vorteilhaft an der Methode ist dabei, dass das Bilden der betragsmäßigen Differenz der Signale und der anschließende Vergleich sowohl soft- als auch hardwareseitig einfach zu implementieren ist. Die ausgegebene Meldung kann ein optisches und/oder akustisches Signal umfassen. Die Meldung kann zudem zeitlich andauern, bis die Veränderung am Betriebsverhalten des Kurbeltriebs behoben ist, oder in regelmäßigen zeitlich begrenzten Abständen auftreten. Die Meldung kann auch in elektronischer Form, beispielsweise als digitaler Eintrag in einem Fehlerspeicher des Kraftfahrzeugs, erfolgen.

Ferner sieht eine Ausführungsform der Erfindung vor, dass das Verfahren in regelmäßigen Zeitabständen und/oder bei bestimmten Kilometerständen des Kraftfahrzeugs durchgeführt wird und die ermittelten aktuellen Drehzahlsignale Nₐₖₜ der Sensoreinrichtung als Trenddaten in einem Speicher hinterlegt und, vorzugsweise auf Anfrage, einem Nutzer ausgegeben werden. Auch in diesem Fall ist das Hinterlegen nicht auf die aktuellen Drehzahlsignale Nₐₖₜ der Sensoreinrichtung beschränkt, vielmehr können auch aktuelle Winkelgeschwindigkeits-, Drehzahlbeschleunigungs-, Winkelbeschleunigungs-, Drehzahlwinkel- und/oder Winkelsignale der Sensoreinrichtung im Speicher als Trenddaten hinterlegt werden. Als Trenddaten werden dabei Daten verstanden, die durch denselben Messprozess ermittelt und anschließend denselben Verfahrensschritten unterzogen wurden, allerdings zu unterschiedlichen Zeitpunkten erfasst werden. Dies ermöglicht ein direktes Vergleichen der Daten, um systematische Effekte, beispielsweise einen kontinuierlichen Verschleiß des Kurbeltriebs, leicht zu erkennen. Vorzugsweise kann somit aus diesen Trenddaten ermittelt werden, ob es sich bei einem Fehlzustand des Kurbeltriebs um einen plötzlichen und damit unerwarteten Schaden oder einen betriebsbedingten und damit absehbaren Verschleiß des Kurbeltriebs handelt. Die Zeitabstände können gleichmäßig und damit periodisch sein oder einer bestimmten Ordnung, jedoch ohne eine feste Periodizität, folgen. Beispielsweise kann der Zeitabstand ein halbes Jahr betragen. Ebenso kann das Durchführen des Verfahrens bei bestimmten Kilometerständen in festen Abständen, beispielsweise alle 5000 km, erfolgen oder gemäß einer bestimmten Ordnung, jedoch ohne eine feste Periodizität, erfolgen. Beispielsweise kann der Kilometerabstand bis zum erneuten Durchführen des Verfahrens mit zunehmendem Kilometerstand des Fahrzeugs verkleinert werden, um so einen aufgrund der hohen Laufleistung wahrscheinlicher werdenden Fehlzustand zuverlässiger zu erkennen. Die Trenddaten können dem Nutzer optisch und/oder akustisch ausgegeben werden. Ferner können die Trenddaten dem Nutzer in elektronischer Form, insbesondere digitale Daten, bereitgestellt werden.

Zur besseren Übersicht wurde in allen bisherigen Ausführungsformen durch die Wortwahl indirekt eine Reihenfolge der einzelnen Verfahrensschritte impliziert (z. B. impliziert der Ausdruck "Differenzieren des gefilterten aktuellen Drehzahlsignals", dass das Differenzieren nach dem Filtern stattfindet). Jedoch ist es für den Fachmann sofort offensichtlich, dass die Verfahrensschritte teilweise vertauscht (z. B. Filtern eines differenzierten Signals) oder kombiniert (z. B. direktes Erfassen einer Winkelbeschleunigung) werden können, ohne dabei von der Idee der Erfindung abzuweichen. Stellvertretend für derartige sinnentsprechende Reihenfolgen der Verfahrensschritte, die dieselbe erfinderische Idee verwirklichen, wird im Folgenden eine Alternative als weiterer allgemeiner Gesichtspunkt der Erfindung ausgeführt. Dabei ist es für den Fachmann wiederum ersichtlich, dass die bisherigen Ausführungsformen entsprechend analog auch auf das nun vorgestellte Verfahren übertragen werden können.

Gemäß einem zweiten allgemeinen Gesichtspunkt der Erfindung wird ein Verfahren zum Erkennen einer Veränderung am Betriebsverhalten eines Kurbeltriebs eines Kraftfahrzeugs, vorzugsweise eines Nutzfahrzeugs, bereitgestellt. Der Kurbeltrieb umfasst eine Kurbelwelle, einen im Betrieb der Kurbelwelle rotierenden Impulsgeber und eine ortsfeste Sensoreinrichtung, welche ein von der Drehzahl des Impulsgebers abhängiges Drehzahlsignal N erzeugt. Ferner umfasst das Verfahren die folgenden Schritte:
Während des Betriebs des Kurbeltriebs wird ein aktuelles Drehzahlsignal Nₐₖₜ der Sensoreinrichtung, vorzugsweise mit einer hohen Abtastrate, erfasst. Dieses aktuelle Drehzahlsignal Nₐₖₜ wird anschließend differenziert oder integriert. Das differenzierte oder integriere aktuelle Drehzahlsignal Nₐₖₜ wird mittels eines Bandpassfilters gefiltert, das dabei mindestens einen, eine erste Mittenfrequenz f₁ umfassenden, ersten Durchlassbereich D₁ aufweist. Das gefilterte differenzierte oder integriere aktuelle Drehzahlsignal Nₐₖₜ wird dann mit einem in einem Speicher hinterlegten Referenzsignal N_{ref} verglichen. Basierend auf dem Vergleich des gefilterten differenzierten oder integrieren aktuellen Drehzahlsignals Nₐₖₜ mit dem Referenzsignal N_{ref} werden so Veränderung am Betriebsverhalten des Kurbeltriebs erkannt.

Ferner betrifft die Erfindung ein Kraftfahrzeug, insbesondere Nutzfahrzeug, mit einem Kurbeltrieb, umfassend eine Kurbelwelle, einen im Betrieb der Kurbelwelle rotierenden Impulsgeber und eine ortsfeste induktive Sensoreinrichtung, die ein von der Drehzahl des Impulsgebers abhängiges Drehzahlsignal N erzeugt, und eine Steuereinrichtung, die eingerichtet ist, die Drehzahlsignale der Sensoreinrichtung zu empfangen, und ein Verfahren zum Erkennen einer Veränderung am Betriebsverhalten eines Kurbeltriebs, wie in diesem Dokument beschrieben, auszuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1: eine schematische Darstellung eines Kurbeltriebs mit einem Impulsgeber und Sensoreinrichtung;
- Figur 2: ein Verfahren zum Erkennen einer Veränderung am Betriebsverhalten eines Kurbeltriebs eines Kraftfahrzeugs gemäß einer Ausführungsform der Erfindung;
- Figur 3: ein Verfahren zum Erkennen einer Veränderung am Betriebsverhalten eines Kurbeltriebs eines Kraftfahrzeugs gemäß einer weiteren Ausführungsform der Erfindung;
- Figur 4: ein um die Mittenfrequenz f₁ = 147.5 Hz bandpassgefiltertes und differenziertes Winkelgeschwindigkeitssignal (=Winkelbeschleunigungssignal) als Funktion der Drehzahl für verschiedene Betriebszustände des Kurbeltriebs;
- Figur 5: ein um die Mittenfrequenz f₂ = 175 Hz bandpassgefiltertes und differenziertes Winkelgeschwindigkeitssignal (=Winkelbeschleunigungssignal) als Funktion der Drehzahl für dieselben Betriebszustände des Kurbeltriebs wie in Figur 4.

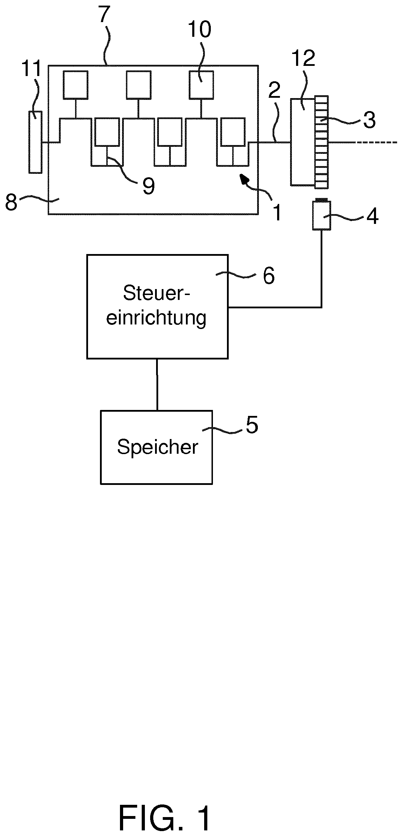

Figur 1 zeigt schematisch einen an sich bekannten Kurbeltrieb 1 eines Kraftfahrzeugs, insbesondere eines Nutzfahrzeugs. Der Kurbeltrieb 1 umfasst eine Kurbelwelle 2, welche Teil eines schematisch nur als Motorblock 7 dargestellten Verbrennungsmotors 8 ist, sowie mehrere mit der Kurbelwelle 2 gekoppelte Pleuel 9 und Kolben 10. Ferner umfasst der Kurbeltrieb 1 wie auch der Verbrennungsmotor 8 weitere Bauteile, die gemäß der üblichen Praxis verwendet werden, insbesondere Gegengewichte, Kurbelwellenlager, Dichtungen, Zylinder, Einspritzsystem etc., ohne dass diese explizit in Figur 1 darstellt sind. Die Kurbelwelle 2 ist innerhalb des Motorblocks 7 angeordnet und beidseitig herausgeführt. An einem aus dem Motorblock 7 herausgeführten Ende der Kurbelwelle 2 ist ein Torsionsschwingungsdämpfer 11 vorgesehen. An einem diesem Ende gegenüberliegenden Ende der Kurbelwelle 2 umfasst der Kurbeltrieb 1 ein Schwungrad 12, beispielsweise ein Zweimassenschwungrad, mit einem als Geberrad ausgeführten Impulsgeber 3. Das Geberrad weist hierbei umfangseitig äquidistante Winkelmarkierungen auf, welche als Löcher oder Vorsprünge ausgeführt sein können. Benachbart zum Geberrad - in der vorliegenden Ausführungsform radial, wobei auch eine axiale Einbauposition möglich wäre - ist eine Sensoreinrichtung 4, beispielsweise eine induktive Sensoreinrichtung, vorgesehen, die geeignet ist, ein von der Drehzahl oder der Winkelgeschwindigkeit des Impulsgebers 3 abhängiges Drehzahlsignal N oder Winkelgeschwindigkeitssignal ω zu erzeugen. Hierzu besteht zwischen dem Abstand der Winkelmarkierungen auf dem Geberrad und der entsprechenden Kurbelwellenumdrehung ein fester Zusammenhang, wodurch aus dem Erfassen der Winkelmarkierungen pro Zeiteinheit die Drehzahl oder die Winkelgeschwindigkeit der Kurbelwelle 2 ermittelt werden kann. In der in Figur 1 dargestellten Ausführungsform wird das von der Sensoreinrichtung 4 erfasste Drehzahlsignal N oder Winkelgeschwindigkeitssignal ω einer Steuereinrichtung 6 bereitgestellt. Ferner ist die Steuereinrichtung 6 mit einem Speicher 5 verbunden, auf dem mindestens ein Referenzsignal N_{ref} oder ω_{ref} der Sensoreinrichtung 4 hinterlegt ist.

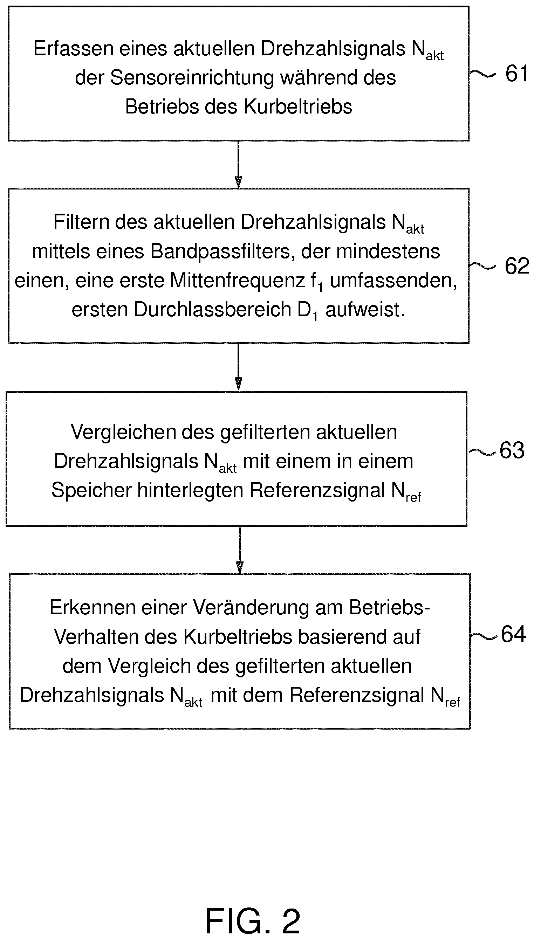

In Figur 2 zeigt ein Flussdiagramm eines Verfahrens zum Erkennen einer Veränderung am Betriebsverhalten eines Kurbeltriebs 1 eines Kraftfahrzeugs gemäß einer Ausführungsform der Erfindung. In Schritt 61 wird ein aktuelles Drehzahlsignal Nₐₖₜ der Sensoreinrichtung 4 während eines, vorzugsweise stationären, Betriebs des Kurbeltriebs 1 erfasst. Das aktuelle Drehzahlsignal Nₐₖₜ gibt dabei im Wesentlichen die Umdrehungen des Impulsgebers 3 pro Zeiteinheit an, jedoch sind diesem eigentlichen Drehzahlsignal meist immer auch weitere Schwingungen der Drehzahl (Oberschwingungen) überlagert. Da die Frequenzen dieser weiteren Schwingungsmoden unter anderem vom aktuellen Zustand des Kurbeltriebs 1 abhängig sind, lässt sich aus dem Vorhandensein gewisser Schwingungsmoden im aktuellen Drehzahlsignal Nₐₖₜ auf das Vorhandensein mögliche Fehlzustände im Kurbeltrieb 1 schließen. Aus diesem Grund wird in Schritt 62 das aktuelle Drehzahlsignal Nₐₖₜ der Sensoreinrichtung 4 mittels eines Bandpassfilters gefiltert, der mindestens einen, eine erste Mittenfrequenz f₁ umfassenden, ersten Durchlassbereich D, aufweist. Vorzugsweise handelt es sich bei dem ersten Durchlassbereich um einen schmalbandigen Durchlassbereich, insbesondere mit einer Bandbreite von etwa 15 Hz. In Schritt 63 wird dann das gefilterte aktuelle Drehzahlsignal Nₐₖₜ der Sensoreinrichtung 4 mit einem in einem Speicher 5 hinterlegten Referenzsignal N_{ref} der Sensoreinrichtung 4 verglichen. Zum Vergleichen der Signale kann das gefilterte aktuelle Drehzahlsignal Nₐₖₜ ferner noch ein zeitlich gemittelt werden. In Schritt 64 erfolgt dann ein Erkennen von Veränderungen am Betriebsverhalten des Kurbeltriebs 1 basierend auf dem Vergleich des gefilterten aktuellen Drehzahlsignals Nₐₖₜ mit dem Referenzsignal N_{ref}. Falls eine Veränderung erkannt wurde, kann dies einem Nutzer des Kraftfahrzeugs dann über optische und/oder akustische Signale und/oder eine Meldung im Fehlerspeicher des Fahrzeugs mitgeteilt werden.

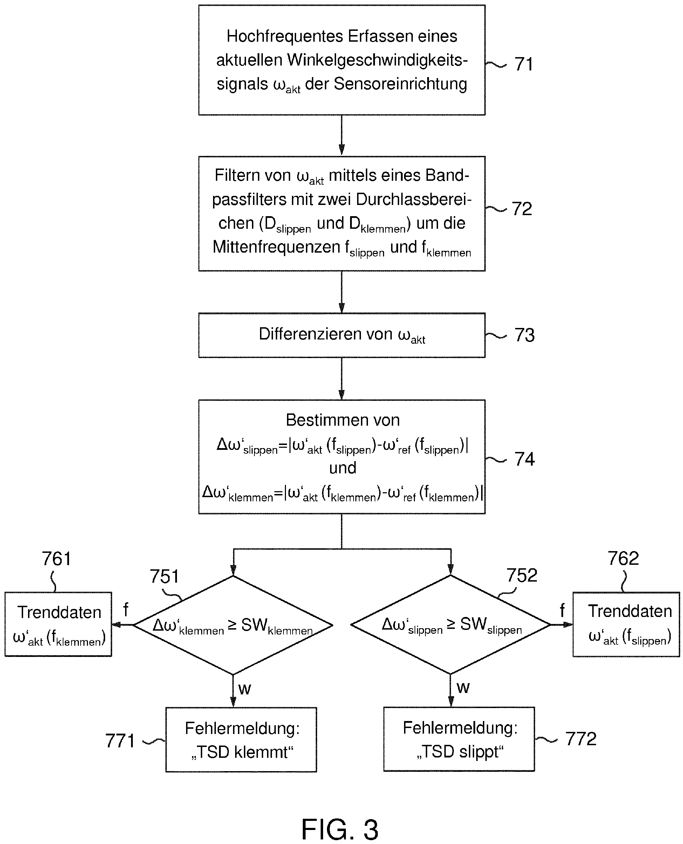

Figur 3 zeigt ein Flussdiagramm eines Verfahrens zum Erkennen einer Veränderung am Betriebsverhalten eines Kurbeltriebs 1 eines Kraftfahrzeugs gemäß einer weiteren Ausführungsform der Erfindung. Ausgangspunkt bildet das hochfrequente Erfassen eines aktuellen Winkelgeschwindigkeitssignals ωₐₖₜ der Sensoreinrichtung 4 in Schritt 71. Dies kann dabei in einen stationären Betrieb des Kurbeltriebs 1 bei einer festen Drehzahl oder drehzahl- und/oder drehmomentabhängig erfolgen. Um nicht nur das prinzipielle Vorliegen eines Fehlzustand des Kurbeltriebs 1 zu erkennen, sondern möglichst auch dessen genaue Art des Fehlzustands zu bestimmen wird in Schritt 72 das aktuelle Winkelgeschwindigkeitssignal ωₐₖₜ mittels eines Bandpassfilters gefiltert, das einen, eine erste Mittenfrequenz fₛₗᵢₚₚₑₙ umfassenden, ersten Durchlassbereich Dₛₗᵢₚₚₑₙ und einen, eine zweite Mittenfrequenz fₖₗₑₘₘₑₙ umfassenden, zweiten Durchlassbereich Dₖₗₑₘₘₑₙ aufweist. Die beiden Mittenfrequenzen wurden dabei so gewählt, dass im Fall eines Slippens einer Sekundärmasse eines im Kurbeltrieb 1 vorhandenen Torsionsschwingungsdämpfers 11 ein erhöhter Signalwert bei der ersten Mittenfrequenz fₛₗᵢₚₚₑₙ auftritt und im Fall eines Klemmens der Sekundärmasse des im Kurbeltrieb 1 vorhandenen Torsionsschwingungsdämpfers 11 ein erhöhter Signalwert bei der zweiten Mittenfrequenz fₖₗₑₘₘₑₙ auftritt. In Schritt 73 wird das gefilterte aktuelle Winkelgeschwindigkeitssignal ωₐₖₜ anschließend differenziert, um dynamische Veränderungen des Kurbeltriebs 1 sensitiver zu erfassen. Das daraus resultierende differenzierte gefilterte aktuelle Winkelgeschwindigkeitssignal ωₐₖₜ wird im Folgenden kurz als aktuelles Winkelbeschleunigungssignal ω'ₐₖₜ bezeichnet, In Schritt 74 wird anschließend aus dem aktuellen Winkelbeschleunigungssignal ω'ₐₖₜ und dem im Speicher 5 hinterlegten entsprechenden Referenzsignal ω'_{ref} die betragsmäßige Differenz gebildet, wobei die Signalanteile der beiden Durchlassbereiche Dₛₗᵢₚₚₑₙ und Dₖₗₑₘₘₑₙ separat betrachtet werden. Im Einzelnen, wird hierzu einerseits die betragsmäßige Differenz Δω'ₛₗᵢₚₚₑₙ für den Signalanteil im Bereich der ersten Mittenfrequenz fₛₗᵢₚₚₑₙ berechnet, d. h. Δω'_{Slippen}=|ω'ₐₖₜ (fₛₗᵢₚₚₑₙ)-ω'_{ref} (fₛₗᵢₚₚₑₙ)|, andererseits die betragsmäßige Differenz Δω'ₖₗₑₘₘₑₙ für den Signalanteil im Bereich der zweiten Mittenfrequenz fₖₗₑₘₘₑₙ, d. h. Δω'ₖₗₑₘₘₑₙ=|ω'ₐₖₜ(fₖₗₑₘₘₑₙ)-ω'_{ref}(fₖₗₑₘₘₑₙ)|. Abhängig vom Wert dieser beiden Größen Δω'ₛₗᵢₚₚₑₙ und Δω'ₖₗₑₘₘₑₙ, werden anschließend verschiedene Operationen ausgeführt:
Wird in Schritt 751 festgestellt, dass Δω'ₖₗₑₘₘₑₙ unterhalb eines ersten Schwellenwerts SWₖₗₑₘ₋ₘₑₙ liegt, so liegt kein Klemmen der Sekundärmasse des im Kurbeltrieb 1 vorhandenen Torsionsschwingungsdämpfers 11 vor, bzw. mögliche Veränderungen am Betriebsverhalten des Kurbeltriebs 1 zu einem Referenzzustand - in diesem Fall der Neuzustand des Kurbeltriebs 1 - liegen innerhalb des Toleranzbereichs (SWₖₗₑₘₘₑₙ). Der aktuellen Winkelbeschleunigungssignalwert im Bereich der zweiten Mittenfrequenz ω'ₐₖₜ (fₖₗₑₘₘₑₙ) wird daraufhin im Speicher 5 als Datenpunkt für eine Trenddatenanalyse hinterlegt (Schritt 761) und kann einem Nutzer auf Anfrage ausgegeben werden. Wird in Schritt 751 hingegen festgestellt, dass Δω'ₖₗₑₘₘₑₙ den ersten Schwellenwerts SWₖₗₑₘₘₑₙ übersteigt, so liegt ein Klemmen der Sekundärmasse des im Kurbeltrieb 1 vorhandenen Torsionsschwingungsdämpfers 11 vor. Woraufhin im Schritt 771 eine Meldung an den Nutzer ausgegeben, dass "der Torsionsschwingungsdämpfer klemmt".

Parallel wird in Schritt 752 festgestellt, ob Δω'ₛₗᵢₚₚₑₙ unter- oder oberhalb eines zweiten Schwellenwerts SWₛₗᵢₚₚₑₙ liegt. Auch hier wird über den Schwellenwert SWₛₗᵢₚₚₑₙ ein gewisser Toleranzbereich definiert, in dem das Verhalten der Sekundärmasse des Torsionsschwingungsdämpfers 11 von seinem Sollverhalten abweichen darf. Falls daher Δω'ₛₗᵢₚₚₑₙ < SWₛₗᵢₚₚₑₙ gilt, so liegt kein Slippen der Sekundärmasse des Torsionsschwingungsdämpfers 11 vor. Daraufhin wird der aktuelle Winkelbeschleunigungssignalwert im Bereich der ersten Mittenfrequenz ω'ₐₖₜ (fₛₗᵢₚ₋ₚₑₙ) im Speicher 5 als Datenpunkt für eine Trenddatenanalyse hinterlegt (Schritt 762) und kann einem Nutzer auf Anfrage ausgegeben werden. Wird in Schritt 752 hingegen festgestellt, dass Δω'ₛₗᵢₚₚₑₙ den zweiten Schwellenwert SWₛₗᵢₚₚₑₙ übersteigt, so liegt ein Slippen der Sekundärmasse des im Kurbeltrieb 1 vorhandenen Torsionsschwingungsdämpfers 11 vor. Woraufhin im Schritt 772 eine Meldung an den Nutzer ausgegeben, dass "der Torsionsschwingungsdämpfer slippt". Durch die Verwendung eines Bandpassfilters mit zwei Durchlassbereichen und den eben vorgestellten Entscheidungsregeln ist es somit möglich nicht nur das prinzipielle Vorliegen eines Fehlzustand des Kurbeltriebs 1 zu erkennen, sondern auch die genaue Art des Fehlzustands zu identifizieren. Durch die Verwendung weiterer Durchlassbereiche bzw. komplexerer Entscheidungsregeln lässt sich die eben vorgestellte Ausführungsform auch leicht um weitere Fehlzustandstypen erweitern.

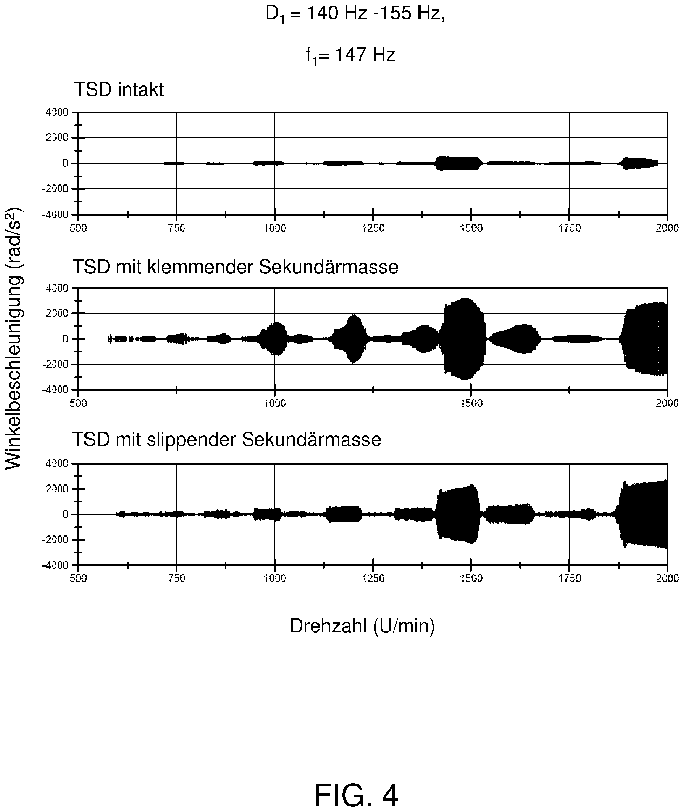

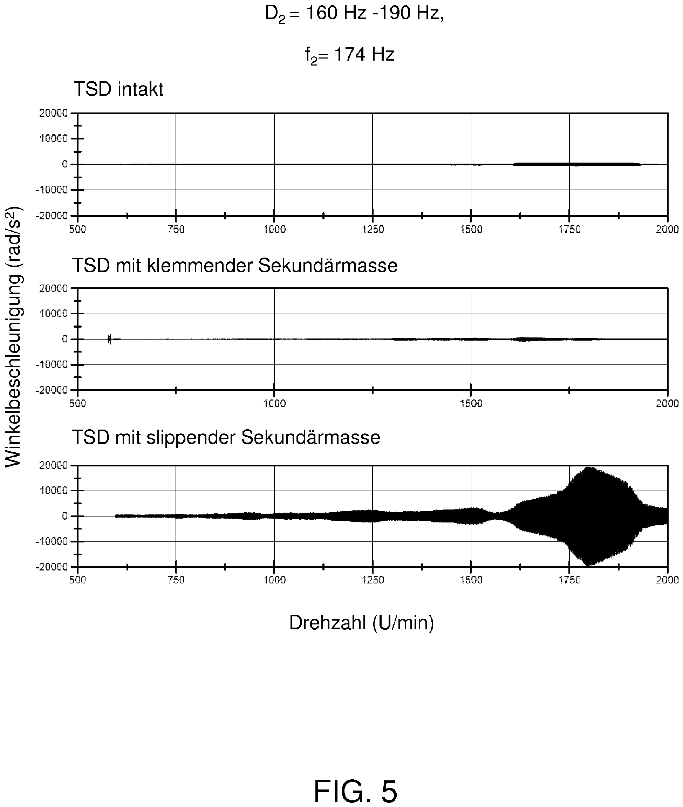

Figur 4 zeigt exemplarisch ein bandpassgefiltertes (erster Durchlassbereich D₁ = 140-155 Hz, Mittenfrequenz f₁ = 147 Hz) und differenziertes Winkelgeschwindigkeitssignal (=Winkelbeschleunigungssignal), das als Funktion der Drehzahl für verschiedene Betriebszustände des Torsionsschwingungsdämpfers (TDS) 11 im Kurbeltrieb 1 gemessen wurde. Im Diagramm oben sind die auftretenden Winkelbeschleunigungen für einen intakten Torsionsschwingungsdämpfer 11 dargestellt. Hierbei treten kaum erhöhte Winkelbeschleunigungssignalamplituden auf, lediglich im Drehzahlbereich um 1450 U/min und 1950 U/min sind leicht erhöhte Signalamplituden aufgrund von Resonanzeffekten zu erkennen. Im Zuge des beanspruchten Verfahrens könnte eine derartige Messung beispielsweise als Referenzsignal α_{ref} im Speicher 5 hinterlegten werden. Das mittlere Diagramm zeigt das drehzahlabhängige Winkelbeschleunigungssignal bei einem Kurbeltrieb 1 mit einem Torsionsschwingungsdämpfer 11, dessen Sekundärmasse klemmt. Im Vergleich zum intakten Torsionsschwingungsdämpfer 11 sind nun die Signalamplituden über den gesamten Drehzahlbereich erhöht, wobei z. B im Drehzahlbereich um 1000 U/min, 1500 U/min und 2000 U/min deutliche Resonanzeffekte auftreten. Unabhängig davon, ob ein drehzahlabhängiger Vergleich erfolgt oder nicht, lässt sich aufgrund der insgesamt im Vergleich zum intakten Torsionsschwingungsdämpfer 11 erhöhten Signalamplituden ein Fehlzustand des Kurbeltriebs 1 mit dem beanspruchten Verfahren sicher detektieren. Analoges gilt auch für den um unteren Diagramm dargestellten Fall eines Torsionsschwingungsdämpfers 11 mit slippender Sekundärmasse. Auch in diesem Fall zeigen sich über den gesamten Drehzahlbereich im Vergleich zum intakten Fall erhöhte Winkelbeschleunigungssignalamplituden. Aufgrund des unterschiedlichen Resonanzverhaltens im Vergleich zum Fall der klemmenden Sekundärmasse ist beispielsweise anhand der Signalamplitude bei 1000 U/min allerdings auch eine Unterscheidung zwischen den beiden Fehlständen (Klemmen, Slippen) möglich. Die Möglichkeit zur Unterscheidung zeigt sich nochmals deutlicherfalls man einen anderen, in Figur 5 dargestellten, Frequenzbereich betrachtet.

Figur 5 zeigt ebenfalls ein bandpassgefiltertes und differenziertes Winkelgeschwindigkeitssignal (=Winkelbeschleunigungssignal) als Funktion der Drehzahl für verschiedene Betriebszustände des Torsionsschwingungsdämpfers 11. Allerdings wurden die Signale in diesem Fall mittels des Bandpassfilters in einem Frequenzbereich von D₂ = 160-190 Hz (Mittenfrequenz f₂ = 174 Hz) gefiltert. Das oberste Diagramm zeigt wiederum die auftretenden Winkelbeschleunigungen bei einem intakten Torsionsschwingungsdämpfer 11, wobei analog zum Fall in Figur 4 nahezu keine erhöhten Signalamplituden über den gesamten Drehzahlbereich zu erkennen sind. Gleiches gilt auch für den im mittleren Diagramm dargestellten Fall eines Torsionsschwingungsdämpfer 11 dessen Sekundärmasse klemmt. Bei dem hier gewählten Durchlassbereich D₂ = 160-190 Hz ist damit trotz des Vorliegens eines Fehlzustands - in diesem Fall eine klemmende Sekundärmasse - kein stark verändertes Verhalten des Winkelbeschleunigungssignals feststellbar. Folglich wäre eine dieser Frequenzbereich alleine, d. h. im Sinne eines ersten Durchlassbereichs, zur Zustandsüberwachung des Kurbeltriebs 1 ungeeignet, um den Fehlzustand des Klemmens der Sekundärmasse zu erkennen. Jedoch lässt sich in diesem Frequenzbereich ein Klemmen der Sekundärmasse deutlich von einem Slippen der Sekundärmasse unterscheiden. Wie im unteren Diagramm in Figur 5 dargestellt, treten beim Vorliegen einer slippenden Sekundärmasse nämlich deutliche Resonanzen und damit erhöhte Signalamplituden auf, vor allem im Drehzahlbereich um 1800 U/min. Durch diese deutlich unterschiedliche Signalcharakteristik lassen sich die beiden Fehlzustände (Klemmen, Slippen) in diesem Frequenzbereich von D₂ = 160-190 Hz eindeutig unterscheiden, weshalb sich dieser Frequenzbereich beispielsweise als zweiter Durchlassbereich des Bandpassfilters eignen würde.

### Bezugszeichenliste

- 1: Kurbeltrieb
- 2: Kurbelwelle
- 3: Impulsgeber
- 4: Sensoreinrichtung
- 5: Speicher
- 6: Steuereinrichtung
- 7: Motorblock
- 8: Verbrennungsmotor
- 9: Pleuel
- 10: Kolben
- 11: Torsionsschwingungsdämpfer
- 12: Schwungrad

## Patentansprüche

1. Verfahren zum Erkennen einer Veränderung am Betriebsverhalten eines Kurbeltriebs (1) eines Kraftfahrzeugs, vorzugsweise Nutzfahrzeugs, wobei der Kurbeltrieb (1) eine Kurbelwelle (2), einen im Betrieb der Kurbelwelle (2) rotierenden Impulsgeber (3) und eine ortsfeste Sensoreinrichtung (4), die ein von der Drehzahl des Impulsgebers (3) abhängiges Drehzahlsignal N erzeugt, umfasst, wobei das Verfahren folgende Schritte umfasst:
- Erfassen eines aktuellen Drehzahlsignals Nₐₖₜ der Sensoreinrichtung (4) während des Betriebs des Kurbeltriebs (1);
- Filtern des aktuellen Drehzahlsignals Nₐₖₜ mittels eines Bandpassfilters, wobei das Bandpassfilter mindestens einen ersten und einen zweiten, vom ersten disjunkten Durchlassbereich D₁ und D₂ aufweist, die jeweils verschiedene Mittenfrequenzen f₁ und f₂ umfassen;
- Vergleichen des gefilterten aktuellen Drehzahlsignals Nₐₖₜ mit einem in einem Speicher (5) hinterlegten Referenzsignal N_{ref}; und
- Erkennen einer Veränderung am Betriebsverhalten des Kurbeltriebs (1) basierend auf dem Vergleich des gefilterten aktuellen Drehzahlsignals Nₐₖₜ mit dem Referenzsignal N_{ref}.

2. Verfahren nach Anspruch 1, **dadurch gekennzeichnet, dass** beim Schritt des Erkennens einer Veränderung am Betriebsverhalten des Kurbeltriebs (1) ein Fehlzustand eines im Kurbeltrieb (1) vorhandenen Torsionsschwingungsdämpfers (11) erkannt wird.

3. Verfahren nach einem der vorherigen Ansprüche, **dadurch gekennzeichnet, dass** es sich bei der ersten Mittenfrequenz f₁ um eine Frequenz handelt, bei der Resonanzeffekte im Kurbeltrieb (1) auftreten, falls ein Fehlzustand des Kurbeltriebs (1) vorliegt.

4. Verfahren nach einem der vorherigen Ansprüche, **dadurch gekennzeichnet, dass** zur Festlegung der ersten Mittenfrequenz f₁ des Bandpassfilters folgende Schritte durchgeführt werden:
- Simulieren oder Messen des Resonanzverhaltens eines intakten Kurbeltriebs (1) für mehrere Anregungsfrequenzen;
- Für mindestens einen Fehlzustand des Kurbeltriebs (1) Simulieren oder Messen des Resonanzverhaltens des Kurbeltriebs (1) mit dem entsprechenden Fehlzustand für mehrere Anregungsfrequenzen;
- Ermitteln einer Anregungsfrequenz, bei der sich das Resonanzverhalten des intakten Kurbeltriebs (1) und des Kurbeltriebs (1) mit Fehlzustand unterscheiden; und
- Festlegen des, die erste Mittenfrequenz f₁ umfassenden, ersten Durchlassbereichs D₁ des Bandpassfilters basierend auf der ermittelten Anregungsfrequenz.

5. Verfahren nach einem der vorherigen Ansprüche, **dadurch gekennzeichnet, dass** das aktuelle Drehzahlsignal Nₐₖₜ als Funktion des Drehmoments und/oder der Drehzahl der Kurbelwelle (2) erfasst wird und entsprechend das im Speicher (5) hinterlegte Referenzsignal der Sensoreinrichtung (4) als Funktion des Drehmoments und/oder der Drehzahl der Kurbelwelle (2) hinterlegt ist, wobei das Vergleichen dadurch erfolgt, dass ein bei einem bestimmten Drehmoment und/oder einer bestimmten Drehzahl der Kurbelwelle (2) erfasster Drehzahlsignalwert des gefilterten aktuellen Drehzahlsignals Nₐₖₜ mit einem Referenzsignalwert des entsprechenden Drehmoments und/oder der entsprechenden Drehzahl der Kurbelwelle (2) verglichen wird.

6. Verfahren nach einem der vorherigen Ansprüche, **dadurch gekennzeichnet, dass** vor dem Schritt des Vergleichens das gefilterte aktuelle Drehzahlsignal Nₐₖₜ differenziert oder integriert wird und dass die Schritte des Vergleichens und des Erkennens basierend auf dem differenzierten oder integrierten gefilterten aktuellen Drehzahlsignal Nₐₖₜ erfolgt.

7. Verfahren nach einem der vorherigen Ansprüche, **dadurch gekennzeichnet, dass** das Verfahren zusätzlich den Schritt umfasst:
- Identifizieren eines Fehlzustands des Kurbeltriebs (1), vorzugsweise ein Klemmen und/oder ein Slippen einer Sekundärmasse eines im Kurbeltrieb (1) vorhandenen Torsionsschwingungsdämpfers (11), basierend auf dem Vergleich des gefilterten aktuellen Drehzahlsignals Nₐₖₜ mit dem Referenzsignal N_{ref} anhand von Signalwerten bei den verschiedenen Mittenfrequenzen f₁ und f₂.

8. Verfahren nach Anspruch 7, **dadurch gekennzeichnet, dass** die zweite Mittenfrequenz f₂ größer als die erste Mittenfrequenz f₁ ist und dass
- ein Klemmen einer Sekundärmasse eines im Kurbeltrieb (1) vorhandenen Torsionsschwingungsdämpfers (11) basierend auf einem erhöhten Signalwert bei der ersten Mittenfrequenz f₁; und/oder
- ein Slippen einer Sekundärmasse eines im Kurbeltrieb (1) vorhandenen Torsionsschwingungsdämpfers (11) basierend auf einem erhöhten Signalwert bei der zweiten Mittenfrequenz f₂
identifiziert werden kann.

9. Verfahren nach einem der vorherigen Ansprüche, **dadurch gekennzeichnet, dass** die erste Mittenfrequenz f₁ des Bandpassfilters im Bereich zwischen 0-400 Hz liegt und/oder das Bandpassfilter eine Bandbreite zwischen 1-20 Hz besitzt.

10. Verfahren nach einem der vorherigen Ansprüche, **dadurch gekennzeichnet, dass** es sich bei dem Referenzsignal N_{ref} um ein Signal handelt, das in einem Referenzzustand des Kurbeltriebs (1) bestimmt wurde, wobei es sich bei dem Referenzzustand um
a) einen Neuzustand des Kurbeltriebs (1) kurz nach der Montage des Kurbeltriebs (1), vorzugsweise nach der Montage der Sensoreinrichtung (4) und des Impulsgebers (3), im Kraftfahrzeug oder einen Zustand des Kurbeltriebs (1) kurz nach einer Wartung oder Reparatur des Kurbeltriebs (1) oder
b) einen Fehlzustand des Kurbeltriebs (1), vorzugsweise ein Klemmen und/oder ein Slippen einer Sekundärmasse in einem Torsionsschwingungsdämpfer (11) im Kurbeltrieb (1), handelt.

11. Verfahren nach einem der vorherigen Ansprüche, **dadurch gekennzeichnet, dass** der Vergleich des gefilterten aktuellen Drehzahlsignals Nₐₖₜ der Sensoreinrichtung (4) mit dem im Speicher (5) hinterlegten Referenzsignal N_{ref} durch Bilden einer betragsmäßigen Differenz der beiden Signale ΔN=| Nₐₖₜ - N_{ref} | erfolgt und eine Meldung ausgegeben wird, falls die betragsmäßige Differenz der beiden Signale ΔN einen Schwellenwert SW übersteigt und/oder unterschreitet.

12. Verfahren nach einem der vorherigen Ansprüche, **dadurch gekennzeichnet, dass** das Verfahren in regelmäßigen Zeitabständen und/oder bei bestimmten Kilometerständen des Kraftfahrzeugs durchgeführt wird und die ermittelten aktuellen Drehzahlsignale Nₐₖₜ der Sensoreinrichtung (4) als Trenddaten in einem Speicher (5) hinterlegt und, vorzugsweise auf Anfrage, einem Nutzer ausgegeben werden.

13. Verfahren nach einem der vorherigen Ansprüche, **dadurch gekennzeichnet, dass** das Verfahren zusätzlich den Schritt umfasst:
- Differenzieren oder Integrieren des aktuellen Drehzahlsignals Nₐₖₜ;
wobei der Schritt des Filterns ein Filtern des differenzierten oder integrieren aktuellen Drehzahlsignals Nₐₖₜ ist;
wobei der Schritt des Vergleichens ein Vergleichen des gefilterten differenzierten oder integrieren aktuellen Drehzahlsignals Nₐₖₜ ist; und
wobei der Schritt des Erkennens auf dem Vergleich des gefilterten differenzierten oder integrieren aktuellen Drehzahlsignals Nₐₖₜ mit dem Referenzsignal N_{ref} basiert.

14. Kraftfahrzeug, vorzugsweise Nutzfahrzeug, mit einem Kurbeltrieb (1), umfassend:
- eine Kurbelwelle (2),
- einen im Betrieb der Kurbelwelle (2) rotierenden Impulsgeber (3),
- eine ortsfeste Sensoreinrichtung (4), die ein von der Drehzahl des Impulsgebers (3) abhängiges Drehzahlsignal N erzeugt, und
- eine Steuereinrichtung (4), die eingerichtet ist, die Drehzahlsignale der Sensoreinrichtung (4) zu empfangen und das Verfahren zum Erkennen einer Veränderung am Betriebsverhalten eines Kurbeltriebs (1) nach einem der vorherigen Ansprüche auszuführen.

## Claims

1. A method for detecting a change in operating behaviour of a crank drive (1) of a motor vehicle, preferably a commercial vehicle, wherein the crank drive (1) comprises a crankshaft (2), a pulse generator (3) rotating during operation of the crankshaft (2) and a stationary sensor device (4) which generates a rotational speed signal N dependent on the rotational speed of the pulse generator (3), wherein the method comprises the following steps:
- detecting a current rotational speed signal N_{act} of the sensor device (4) during operation of the crank drive (1);
- filtering the current rotational speed signal N_{act} by a band pass filter, the band pass filter comprising at least a first and a disjoint from the first second passband D₁ and D₂, which each comprise different centre frequencies f₁ and f₂;
- comparing the filtered current rotational speed signal N_{act} with a reference signal N_{ref} stored in a memory (5); and
- detecting a change in the operating behaviour of the crank drive (1) based on the comparison of the filtered current rotational speed signal N_{act} with the reference signal N_{ref}.

2. The method according to claim 1, **characterized in that,** during the step of detecting a change in the operating behaviour of the crank drive (1), a fault state of a torsional vibration damper (11) present in the crank drive (1) is detected.

3. The method according to one of the preceding claims, **characterized in that** the first centre frequency f₁ is a frequency at which resonance effects occur in the crank drive (1) if a fault state of the crank drive (1) is present.

4. The method according to one of the preceding claims, **characterized in that** the following steps are performed to determine the first centre frequency f₁ of the band pass filter:
- simulating or measuring the resonance behaviour of an intact crank drive (1) for several excitation frequencies;
- for at least one fault state of the crank drive (1), simulating or measuring the resonance behaviour of the crank drive (1) with the corresponding fault state for several excitation frequencies;
- determining an excitation frequency at which the resonance behaviour of the intact crank drive (1) and the crank drive (1) with a fault state differ; and
- determining the first passband D₁ of the band pass filter, comprising the first centre frequency f₁, based on the determined excitation frequency.

5. The method according to one of the preceding claims, **characterized in that** the current rotational speed signal N_{act} is detected as a function of the torque and/or the rotational speed of the crankshaft (2) and the reference signal of the sensor device (4) stored in the memory (5) is correspondingly stored as a function of the torque and/or the rotational speed of the crankshaft (2), wherein the comparison is performed by comparing a rotational speed signal value of the filtered current rotational speed signal N_{act} detected at a specific torque and/or a specific rotational speed of the crankshaft (2) with a reference signal value of the corresponding torque and/or the corresponding rotational speed of the crankshaft (2).

6. The method according to one of the preceding claims, **characterized in that** the filtered current rotational speed signal N_{act} is differentiated or integrated before the step of comparing, and **in that** the steps of comparing and determining are performed based on the differentiated or integrated filtered current rotational speed signal N_{act}.

7. The method according to one of the preceding claims, **characterized in that** the method further comprises the step of:
- identifying a fault state of the crank drive (1), preferably a jamming and/or a slipping of a secondary mass of a torsional vibration damper (11) present in the crank drive (1), based on the comparison of the filtered current rotational speed signal N_{act} with the reference signal N_{ref} using signal values at the different centre frequencies f₁ and f₂.

8. The method according to claim 7, **characterized in that** the second centre frequency f₂ is greater than the first centre frequency f₁, and **in that**
- a jamming of a secondary mass of a torsional vibration damper (11) present in the crank drive (1) can be identified based on an increased signal value at the first centre frequency f₁; and/or
- a slipping of a secondary mass of a torsional vibration damper (11) present in the crank drive (1) can be identified based on an increased signal value at the second centre frequency f₂

9. The method according to one of the preceding claims, **characterized in that** the first centre frequency f₁ of the band pass filter is in the range between 0-400 Hz and/or the band pass filter has a bandwidth between 1-20 Hz.

10. The method according to one of the preceding claims, **characterized in that** the reference signal N_{ref} is a signal which was determined in a reference state of the crank drive (1), the reference state being:
a) a new state of the crank drive (1) shortly after installation of the crank drive (1), preferably after installation of the sensor device (4) and the pulse generator (3), in the motor vehicle or a state of the crank drive (1) shortly after maintenance or repair of the crank drive (1), or
b) a fault state of the crank drive (1), preferably a jamming and/or slipping of a secondary mass in a torsional vibration damper (11) in the crank drive (1).

11. The method according to one of the preceding claims, **characterized in that** the comparison of the filtered current rotational speed signal N_{act} of the sensor device (4) with the reference signal N_{ref} stored in the memory (5) is performed by forming a difference in magnitude between the two signals ΔN= | N_{act} - N_{ref} | and a message is output if the difference in magnitude between the two signals ΔN exceeds and/or falls below a threshold value SW.

12. The method according to one of the preceding claims, **characterized in that** the method is performed at regular intervals and/or at specific mileages of the motor vehicle and the determined current rotational speed signals N_{act} of the sensor device (4) are stored as trend data in a memory (5) and, preferably on request, output to a user.

13. The method according to one of the preceding claims, **characterized in that** the method further comprises the step of:
- differentiating or integrating the current rotational speed signal N_{act};
wherein the step of filtering is a filtering of the differentiated or integrated current rotational speed signal N_{act};
wherein the step of comparing is comparing the filtered differentiated or integrated current rotational speed signal N_{act}; and
wherein the step of determining is based on the comparison of the filtered differentiated or integrated current rotational speed signal N_{act} with the reference signal N_{ref}.

14. A motor vehicle, preferably commercial vehicle, with a crank drive (1), comprising:
- a crankshaft (2),
- a pulse generator (3) rotating during operation of the crankshaft (2),
- a stationary sensor device (4) which generates a rotational speed signal N dependent on the rotational speed of the pulse generator (3), and
- a control device (4) which is configured to receive the rotational speed signal of the sensor device (4) and to perform the method for detecting a change in the operating behaviour of a crank drive (1) according to one of the preceding claims.

## Revendications

1. Procédé de détection d'un changement de comportement en fonctionnement d'une transmission à manivelle (1) d'un véhicule automobile, de préférence d'un véhicule utilitaire, la transmission à manivelle (1) comprenant un vilebrequin (2), un générateur d'impulsions (3) qui tourne pendant le fonctionnement du vilebrequin (2) et un dispositif de détection stationnaire (4) qui génère un signal de vitesse de rotation N qui dépend de la vitesse de rotation du générateur d'impulsions (3), le procédé comprenant les étapes suivantes :
- détecter un signal de vitesse de rotation actuel Nₐₖₜ du dispositif de détection (4) pendant le fonctionnement de la transmission à manivelle (1) ;
- filtrer le signal de vitesse de rotation actuel Nₐₖₜ à l'aide d'un filtre passe-bande, le filtre passe-bande comportant au moins une première bande passante D₁ et une deuxième bande passante D₂ distincte de la première bande passante, lesquelles incluent des fréquences centrales respectives f₁ et f₂ différentes ;
- comparer le signal de vitesse de rotation actuel filtré Nₐₖₜ à un signal de référence N_{ref} stocké dans une mémoire (5) ; et
- détecter un changement de comportement en fonctionnement de la transmission à manivelle (1) sur la base de la comparaison du signal de vitesse de rotation actuel filtré Nₐₖₜ au signal de référence N_{ref}.

2. Procédé selon la revendication 1, **caractérisé en ce que**, à l'étape de détection d'un changement de comportement en fonctionnement de la transmission à manivelle (1), un état défectueux d'un amortisseur de vibrations de torsion (11), présent dans la transmission à manivelle (1), est détecté.

3. Procédé selon l'une des revendications précédentes, **caractérisé en ce que** la première fréquence centrale f₁ est une fréquence à laquelle des effets de résonance se produisent dans la transmission à manivelle (1) en cas d'état défectueux de la transmission à manivelle (1).

4. Procédé selon l'une des revendications précédentes, **caractérisé en ce que** les étapes suivantes sont réalisées pour déterminer la première fréquence centrale f₁ du filtre passe-bande :
- simuler ou mesurer le comportement en résonance d'une transmission à manivelle (1) intacte pour plusieurs fréquences d'excitation ;
- pour au moins un état défectueux de la transmission à manivelle (1), simuler ou mesurer le comportement en résonance de la transmission à manivelle (1) avec l'état défectueux correspondant pour plusieurs fréquences d'excitation ;
- déterminer une fréquence d'excitation à laquelle le comportement en résonance de la transmission à manivelle intacte (1) et celui de la transmission à manivelle (1) dans un état défectueux diffèrent ; et
- définir la première bande passante D₁ du filtre passe-bande incluant la première fréquence centrale f₁ sur la base de la fréquence d'excitation déterminée.

5. Procédé selon l'une des revendications précédentes, **caractérisé en ce que** le signal de vitesse de rotation actuel Nₐₖₜ est détecté en fonction du couple et/ou de la vitesse de rotation du vilebrequin (2) et, de manière correspondante, le signal de référence du dispositif de détection (4) est stocké dans la mémoire (5) en fonction du couple et/ou de la vitesse de rotation du vilebrequin (2), la comparaison étant effectuée du fait qu'une valeur de signal de vitesse de rotation du signal de vitesse de rotation actuelle filtrée Nₐₖₜ, laquelle valeur est détectée pour un couple déterminé et/ou une vitesse de rotation déterminée du vilebrequin (2), est comparée à une valeur de signal de référence du couple correspondant et/ou de la vitesse de rotation correspondante du vilebrequin (2).

6. Procédé selon l'une des revendications précédentes, **caractérisé en ce que**, avant l'étape de comparaison, le signal de vitesse de rotation actuelle filtré Nₐₖₜ est différencié ou intégré et **en ce que** les étapes de comparaison et de détection sont effectuées sur la base du signal de vitesse de rotation actuel filtré Nₐₖₜ différencié ou intégré.

7. Procédé selon l'une des revendications précédentes, **caractérisé en ce que** le procédé comprend en outre l'étape suivante :
- identifier un état défectueux de la transmission à manivelle (1), de préférence un blocage et/ou un glissement d'une masse secondaire d'un amortisseur de vibrations de torsion (11) présent dans la transmission à manivelle (1), sur la base de la comparaison du signal de vitesse de rotation actuel filtré Nₐₖₜ au signal de référence N_{ref} par référence aux valeurs de signal pour les différentes fréquences centrales f₁ et f₂.

8. Procédé selon la revendication 7, **caractérisé en ce que** la deuxième fréquence centrale f₂ est supérieure à la première fréquence centrale f₁ et **en ce que**
- un blocage d'une masse secondaire d'un amortisseur de vibrations de torsion (11) présent dans la transmission à manivelle (1) sur la base d'une valeur de signal augmentée pour la première fréquence centrale f₁ ; et/ou
- un glissement d'une masse secondaire d'un amortisseur de vibrations de torsion (11) présent dans la transmission à manivelle (1) peut être identifié sur la base d'une valeur de signal augmentée pour la deuxième fréquence centrale f₂.

9. Procédé selon l'une des revendications précédentes, **caractérisé en ce que** la première fréquence centrale f₁ du filtre passe-bande est dans la gamme comprise entre 0 et 400 Hz et/ou le filtre passe-bande a une bande passante comprise entre 1 et 20 Hz.

10. Procédé selon l'une des revendications précédentes, **caractérisé en ce que** le signal de référence N_{ref} est un signal qui a été déterminé dans un état de référence de la transmission à manivelle (1), l'état de référence étant
a) un nouvel état de la transmission à manivelle (1) peu après le montage de la transmission à manivelle (1), de préférence après le montage du dispositif de détection (4) et du générateur d'impulsions (3), dans le véhicule automobile ou un état de la transmission à manivelle (1) peu après l'entretien ou la réparation de la transmission à manivelle (1) ou
b) un état défectueux de la transmission à manivelle (1), de préférence un blocage et/ou un glissement d'une masse secondaire dans un amortisseur de vibrations de torsion (11) dans la transmission à manivelle (1).

11. Procédé selon l'une des revendications précédentes, **caractérisé en ce que** la comparaison du signal de vitesse de rotation actuelle filtré Nₐₖₜ du dispositif de détection (4) au signal de référence N_{ref} stocké dans la mémoire (5) est effectuée par formation d'une différence en valeur absolue ΔN=|Nₐₖₜ - N_{ref}| entre les deux signaux et un message est délivré si la différence en valeur absolue ΔN entre les deux signaux devient supérieure et/ou inférieure à une valeur seuil SW.

12. Procédé selon l'une des revendications précédentes, **caractérisé en ce que** le procédé est mis en oeuvre à intervalles réguliers et/ou pour des kilométrages déterminés du véhicule automobile et **en ce que** les signaux de vitesse de rotation actuels Nₐₖₜ déterminés du dispositif de détection (4) sont stockés comme données de tendance dans une mémoire (5) et, de préférence, délivrés à un utilisateur sur demande.

13. Procédé selon l'une des revendications précédentes, **caractérisé en ce que** le procédé comprend en outre l'étape suivante :
- différencier ou intégrer le signal de vitesse de rotation actuel Nₐₖₜ ;
l'étape de filtrage comprenant le filtrage du signal de vitesse de rotation actuel Nₐₖₜ différencié ou intégré ; l'étape de comparaison comprenant la comparaison du signal de vitesse de rotation actuel Nₐₖₜ différencié ou intégré filtré ; et
l'étape de détection étant basée sur la comparaison du signal de vitesse de rotation actuel Nₐₖₜ différencié ou intégré filtré au signal de référence N_{ref}.

14. Véhicule automobile, de préférence véhicule utilitaire, équipé d'une transmission à manivelle (1), comprenant :
- un vilebrequin (2),
- un générateur d'impulsions (3) tournant pendant le fonctionnement du vilebrequin (2),
- un dispositif de détection stationnaire (4) qui génère un signal de vitesse de rotation N qui dépend de la vitesse de rotation du générateur d'impulsions (3),
et
- un dispositif de commande (4) qui est conçu pour recevoir les signaux de vitesse de rotation du dispositif de détection (4) et pour mettre en oeuvre le procédé de détection de changement de comportement en fonctionnement d'une transmission à manivelle (1) selon l'une des revendications précédentes.
